(19)

Europäisches Patentamt
European Patent Office
Office européen des brevets

(11)  **EP 4 192 143 B1**

(12)                    **EUROPEAN PATENT SPECIFICATION**

(45) Date of publication and mention
     of the grant of the patent:
     **26.03.2025  Bulletin 2025/13**

(21) Application number: **20946650.7**

(22) Date of filing: **27.07.2020**

(51) International Patent Classification (IPC):
     ***H04W 72/02*** *(2009.01)*      ***H04W 72/04*** *(2023.01)*

(52) Cooperative Patent Classification (CPC):
     **H04W 72/02; H04W 72/115; H04W 72/40;
     H04W 92/18**

(86) International application number:
     **PCT/CN2020/104893**

(87) International publication number:
     **WO 2022/021008 (03.02.2022 Gazette 2022/05)**

(54) **METHOD FOR SIDELINK CONFIGURED GRANT RESOURCE DETERMINATION AND TERMINAL
     DEVICE**

     VERFAHREN ZUR BESTIMMUNG EINER SIDELINK-KONFIGURIERTEN
     BERECHTIGUNGSRESSOURCE UND ENDGERÄTEVORRICHTUNG

     PROCÉDÉ DE DÉTERMINATION DE RESSOURCES D'AUTORISATION CONFIGURÉE DE
     LIAISON LATÉRALE, ET ÉQUIPEMENT TERMINAL

(84) Designated Contracting States:
     **AL AT BE BG CH CY CZ DE DK EE ES FI FR GB
     GR HR HU IE IS IT LI LT LU LV MC MK MT NL NO
     PL PT RO RS SE SI SK SM TR**

(43) Date of publication of application:
     **07.06.2023  Bulletin 2023/23**

(73) Proprietor: **GUANGDONG OPPO MOBILE
     TELECOMMUNICATIONS
     CORP., LTD.
     Dongguan, Guangdong 523860 (CN)**

(72) Inventor: **ZHAO, Zhenshan
     Dongguan, Guangdong 523860 (CN)**

(74) Representative: **Mewburn Ellis LLP
     Aurora Building
     Counterslip
     Bristol BS1 6BX (GB)**

(56) References cited:
     **CN-A- 110 831 202      CN-A- 111 385 765
     US-A1- 2020 045 674     US-A1- 2020 107 236**

• **OPPO: "Remaining issues of mode 1 resource
  allocation for NR-V2X", vol. RAN WG1, no. e-
  Meeting; 20200420 - 20200430, 11 April 2020
  (2020-04-11), XP052341829, Retrieved from the
  Internet <URL:https://ftp.3gpp.org/tsg_ran/
  WG1_RL1/TSGR1_100b_e/Docs/R1-2001746.zip
  R1-2001746.docx> [retrieved on 20200411]**
• **OPPO: "Discussion on resource allocation and
  HARQ process id of configured grant", vol. RAN
  WG2, no. E-meeting; 20200801, 7 August 2020
  (2020-08-07), XP051911676, Retrieved from the
  Internet <URL:https://ftp.3gpp.org/tsg_ran/
  WG2_RL2/TSGR2_111-e/Docs/R2-2006769.zip
  R2-2006769 - Discussion on resource and HARQ
  process id of configured grant v0.3.docx>
  [retrieved on 20200807]**
• **LG ELECTRONICS INC: "Corrections to 5G V2X
  with NR Sidelink", vol. RAN WG2, no. Online;
  20200601 - 20200612, 23 June 2020 (2020-06-23),
  XP051904145, Retrieved from the Internet
  <URL:https://ftp.3gpp.org/tsg_ran/WG2_RL2/
  TSGR2_110-e/Docs/R2-2005970.zip
  R2-2005970_CR0730r2_38321_V2X.docx>
  [retrieved on 20200623]**

- NOKIA ET AL: "Remaining details of Physical layer structure for sidelink", vol. RAN WG1, no. e-Meeting; 20200420 - 20200430, 11 April 2020 (2020-04-11), XP051875280, Retrieved from the Internet <URL:https://ftp.3gpp.org/tsg_ran/WG1_RL1/TSGR1_100b_e/Docs/R1-2001803.zip R1-2001803-Nokia-5G_Remaining details of Physical layer structure for sidelink.docx> [retrieved on 20200411]

- OPPO: ""Remaining Issues of Mode 1 Resource Allocation for NR-V2X"", 3GPP TSG RAN WG1 #100BIS E-MEETING R1-2001746, 11 April 2020 (2020-04-11), XP051875245
- OPPO: ""Remaining Issues of Mode 1 Resource Allocation for NR-V2X"", 3GPP TSG RAN WG1 #101 E-MEETING R1-2004071, 15 May 2020 (2020-05-15), XP051885830

**Description**

TECHNICAL FIELD

Implementations of the disclosure relate to the field of communication, and more particularly, to a method for sidelink (SL) configured grant (CG) resource determination and a terminal device.

BACKGROUND

In the new radio vehicle to everything (NR-V2X) system, the network device can allocate sidelink (SL) configured grant (CG) transmission resources for the terminal device. However, how the terminal device accurately determines a time-domain resource for SL CG when the terminal device needs to perform SL transmission is an open technical problem.

OPPO: "Remaining issues of mode 1 resource allocation for NR-V2X", 3GPP DRAFT; R1-2001746, 3RD GENERATION PARTNERSHIP PROJECT (8GPP), MOBILE COMPETENCE CENTRE ; 650, ROUTE DES LUCIOLES; F-06921 SOPHIA-ANTIPOLIS CEDEX discusses the remaining issues of NR Uu to control NR SL.

US20200045674A1 provides a method for a first user equipment (UE) to exchange one or more sidelink packets with a second UE. The method receives, from a serving base station, a sidelink resource allocation configuration that includes i) one or more sidelink resource configurations on one or more sidelink frequency carriers, and (ii) data identifying a valid area of the sidelink resource configurations. The method determines, based on the data identifying the valid area, whether the first UE is located within the valid area. If the method determines that the first UE is located within the valid area, the method exchanges the one or more sidelink packets with the second UE based on the received sidelink resource allocation configuration, otherwise, the method stops exchanging the one or more sidelink packets, on one or more sidelink resources indicated by the sidelink resource configurations, with the second UE.

OPPO: "Discussion on resource allocation and HARQ process id of configured grant", 3GPP DRAFT; R2-2006769, 3RD GENERATION PARTNERSHIP PROJECT (8GPP), MOBILE COMPETENCE CENTRE ; 650, ROUTE DES LUCIOLES ; F-06921 SOPHIA-ANTIPOLIS CEDEX ; FRANCE vol. RAN WG2, no. E-meeting discusses that the latest 38.321 [1] capture the equation on resource allocation and HARQ process id of configured grant. After carefully checking we find the equation is not technically correct. In this paper correction is proposed to fix the problem.

SUMMARY

The invention is defined by the appended independent claims and further embodiments are described by the dependent claims.

BRIEF DESCRIPTION OF THE DRAWINGS

FIG. 1 is a schematic diagram illustrating sidelink (SL) communication in network coverage provided in implementations of the disclosure.
FIG. 2 is a schematic diagram illustrating SL communication in partial network coverage provided in implementations of the disclosure.
FIG. 3 is a schematic diagram illustrating SL communication out of network coverage provided in implementations of the disclosure.
FIG. 4 is a schematic diagram of unicast SL communication provided in implementations of the disclosure.
FIG. 5 is a schematic diagram of multicast SL communication provided in implementations of the disclosure.
FIG. 6 is a schematic diagram of broadcast SL communication provided in implementations of the disclosure.
FIG. 7 is a schematic diagram illustrating determination of SL time-domain resources provided in implementations of the disclosure.
FIG. 8 is a schematic flowchart of a method for SL CG resource determination provided according to implementations of the disclosure.
FIG. 9 is a schematic diagram of a method for SL time-domain resource determination provided according to implementations of the disclosure.
FIG. 10 is a schematic diagram of another method for SL time-domain resource determination provided according to implementations of the disclosure.
FIG. 11 is a schematic block diagram of a terminal device provided according to implementations of the disclosure.
FIG. 12 is a schematic block diagram of a communication device provided according to implementations of the disclosure.

FIG. 13 is a schematic block diagram of an apparatus provided according to implementations of the disclosure.
FIG. 14 is a schematic block diagram of a communication system provided according to implementations of the disclosure.

## DETAILED DESCRIPTION

The following will describe technical solutions of implementations of the disclosure with reference to the accompanying drawings. Apparently, implementations described herein are merely some implementations, rather than all implementations, of the disclosure.

The technical solutions of implementations of the disclosure are applicable to various communication systems, for example, a global system of mobile communication (GSM), a code division multiple access (CDMA) system, a wideband code division multiple access (WCDMA) system, a general packet radio service (GPRS) system, a long term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area networks (WLAN), a wireless fidelity (WiFi), a 5th-generation (5G) system, or other communication systems.

Generally speaking, a conventional communication system generally supports a limited number of connections and therefore is easy to implement. However, with development of communication technology, a mobile communication system will not only support conventional communication but also support, for example, device to device (D2D) communication, machine to machine (M2M) communication, machine type communication (MTC), and vehicle to vehicle (V2V) communication, or vehicle to everything (V2X) communication. Implementations of the disclosure can also be applied to these communication systems.

Optionally, a communication system of implementations of the disclosure may be applied to a carrier aggregation (CA) scenario, a dual connectivity (DC) scenario, or a standalone (SA) network deployment scenario.

Optionally, the communication system of implementations of the disclosure may be applied to an unlicensed spectrum or a licensed spectrum, where the unlicensed spectrum may also be referred to as a shared spectrum, and the licensed spectrum may also be referred to as a non-shared spectrum.

Implementations of the disclosure have been described in connection with the network device and the terminal device. The terminal device may also be referred to as a user equipment (UE), an access terminal, a subscriber unit, a subscriber station, a mobile station, a remote station, a remote terminal, a mobile device, a user terminal, a terminal, a wireless communication device, a user agent, or a user device.

The terminal device may be a station (ST) in a WLAN, a cellular radio telephone, a cordless telephone, a session initiation protocol (SIP) telephone, a wireless local loop (WLL) station, a personal digital assistant (PDA), a handheld device with wireless communication functions, a computing device, other processing devices coupled with a wireless modem, an in-vehicle device, a wearable device, and a next-generation communication system, for example, a terminal device in an NR network, a terminal device in a future evolved public land mobile network (PLMN), etc.

In implementations of the disclosure, the terminal device may be deployed on land, for example, deployed indoors or outdoors, and may be handheld, wearable, or vehicle-mounted. The terminal device may also be deployed on water, for example, on a ship, etc. The terminal device may also be deployed in the air, for example, on an airplane, an air balloon, a satellite, etc.

In implementations of the disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, etc.

By way of explanation rather than limitation, according to implementations of the disclosure, the terminal device may also be a wearable device. The wearable device may also be called a wearable smart device, which is a generic term of wearable devices obtained through intelligentization designing and development on daily wearing products with wearable technology, for example, glasses, gloves, watches, clothes, accessories, and shoes. The wearable device is a portable device that can be directly worn or integrated into clothes or accessories of a user. In addition to being a hardware device, the wearable device can also realize various functions through software support, data interaction, and cloud interaction. A wearable smart device in a broad sense includes, for example, a smart watch or smart glasses with complete functions and large sizes and capable of realizing independently all or part of functions of a smart phone, and for example, various types of smart bands and smart jewelries for physical monitoring, of which each is dedicated to application functions of a certain type and required to be used together with other devices such as a smart phone.

In implementations of the disclosure, the network device may be a device configured to communicate with a mobile device, and the network device may be an access point (AP) in the WLAN, a base transceiver station (BTS) in the GSM or CDMA, may also be a Node B (NB) in WCDMA, and may further be an evolutional Node B (eNB or eNodeB) in LTE, or a relay station or AP, or an in-vehicle device, a wearable device, a network device or a g-Node B (gNB) in the NR network, a network device in the future evolved PLMN, a network device in a NTN, etc.

By way of example rather than limitation, in implementations of the disclosure, the network device may be of mobility. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station located on land, water, etc.

In implementations of the disclosure, the network device can provide services for a cell, and the terminal device communicates with the network device through a transmission resource (for example, a frequency-domain resource or a spectrum resource) for the cell. The cell may be a cell corresponding to the network device (for example, a base station). The cell may correspond to a macro base station, and may correspond to a base station corresponding to a small cell. The small cell may include: a metro cell, a micro cell, a pico cell, a femto cell, and the like. These small cells are characterized by small coverage and low transmission power and are adapted to provide data transmission service with high-rate.

It should be understood that, the terms "system" and "network" herein are usually interchangeable. The term "and/or" herein describes only an association relationship for describing associated objects and represents that three relationships may exist. For example, A and/or B may represent the following three cases: only A exists, both A and B exist, and only B exists. In addition, the character "/" herein generally indicates an "or" relationship between the associated objects.

It should be understood that, the "indication" mentioned in embodiments of the disclosure may be a direct indication or an indirect indication, or indicate an association. For example, if A indicates B, it can mean that A directly indicates B, for example, B can be obtained through A, or mean that A indicates B indirectly, for example, A indicates C, and B can be obtained through C, or it can also mean that there is an association between A and B.

In the description of embodiments of the disclosure, the term "corresponding" can mean that there is a direct or indirect correspondence between two elements, or that there is an association between two elements, or that there is a relationship of "indicating" and "being indicated", "configuring" and "being configured", and the like.

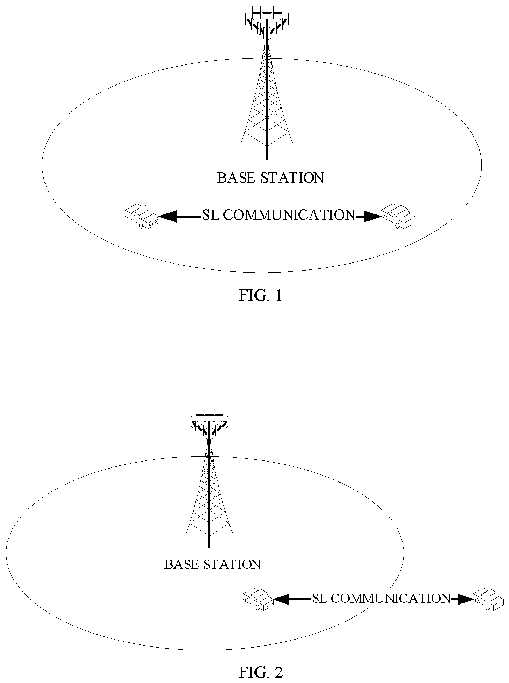

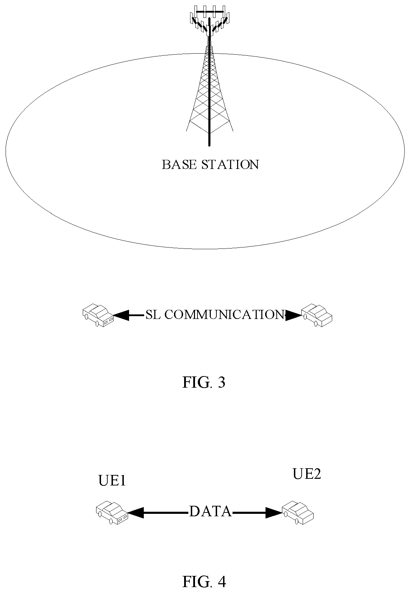

It should be noted that, according to the network coverage of a communicating terminal, sidelink (SL) communication can be classified into SL communication in network coverage, as illustrated in FIG. 1, SL communication in partial network coverage, as illustrated in FIG. 2, or SL communication out of network coverage, as illustrated in FIG. 3.

FIG.1: In SL communication in network coverage, all terminals in SL communication are in the coverage of the same base station. Therefore, these terminals can receive a configuration signaling from the base station and perform SL communication based on the same SL configuration.

FIG. 2: In SL communication in partial network coverage, some terminals in SL communication are in the coverage of the base station. These terminals can receive a configuration signaling from the base station and perform SL communication according to the configuration of the base station. However, terminals out of the network coverage cannot receive the configuration signaling from the base station. In this case, the terminals out of the network coverage will determine SL configuration for SL communication according to pre-configuration information and information carried in a physical sidelink broadcast channel (PSBCH) transmitted from the terminal in the network coverage.

FIG. 3: For SL communication out of network coverage, all terminals in SL communication are out of the network coverage and determine SL configuration based on the pre-configuration information for SL communication.

It should be noted that, the D2D communication is a D2D-based SL transmission technology. The D2D communication is different from a manner that communication data is received or transmitted through a base station in a traditional cellular system, and thus has higher spectral efficiency and lower transmission delay. An internet of vehicles (IOV) system adopts D2D direct communication. Two transmission modes are defined in the 3rd generation partnership project (3GPP). The two transmission modes are respectively denoted as mode A and mode B. Implementations of the disclosure may be applied to mode A and/or mode B.

Mode A: Transmission resources of the terminal are allocated by the base station, and the terminal transmits data on the SL with the resources allocated by the base station. The base station can allocate to the terminal resources for a single transmission or resources for semi-static transmission. As illustrated in FIG. 1, the terminal is in the network coverage, and the network allocates to the terminal transmission resources for SL transmission.

Mode B: The terminal selects a resource from a resource pool for data transmission. As illustrated in FIG. 3, the terminal is out of the coverage of the cell. The terminal autonomously selects a transmission resource for SL transmission from a pre-configured resource pool. Alternatively, as illustrated in FIG. 1, the terminal autonomously selects a transmission resource for SL transmission from a resource pool configured by the network.

It should be noted that, in NR-V2X, the user may be in a mixed mode. That is, the user can obtain a resource both in mode A and in mode B.

In NR-V2X, autonomous driving is supported. Therefore, there are higher requirements for data interaction between vehicles, such as higher throughput, lower latency, higher reliability, larger coverage, more flexible resource allocation, etc.

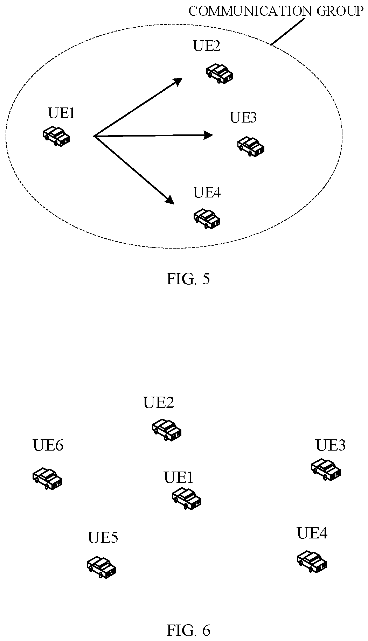

In LTE-V2X, broadcast transmission is supported. In NR-V2X, unicast transmission and multicast transmission are introduced. For unicast transmission, there is only one receiving terminal. As illustrated in FIG. 4, UE 1 performs unicast transmission with UE 2. For multicast transmission, all terminals in a communication group or all terminals within a certain transmission distance are receiving terminals. As illustrated in FIG. 5, UE 1, UE 2, UE 3, and UE 4 form a communication group, where UE 1 transmits data, and other terminals in the group are receiving terminals. For broadcast transmission, any terminal around a transmitting terminal is a receiving terminal. As illustrated in FIG. 6, UE 1 is the transmitting terminal, and other terminals around UE 1, i.e., UE 2 to UE 6 are all receiving terminals.

A resource pool is introduced in the SL transmission system. The so-called resource pool is a set of transmission resources. Both transmission resources configured by the network and transmission resources autonomously selected by the terminal are resources in the resource pool. The resource pool can be pre-configured, or configured by the network, and one or more resource pools can be configured. The resource pool is further classified into a transmitting resource pool or a receiving resource pool. Transmission resources in the transmitting resource pool are configured for transmitting SL data. The terminal receives SL data on transmission resources in the receiving resource pool.

In LTE-V2X, a set of subframes for SL transmission mode 3 (i.e., the mode A mentioned above) or mode 4 (i.e., the mode B mentioned above) in a physical sidelink shared channel (PSSCH) resource pool can be denoted by $\left(t_0^{SL}, t_1^{SL}, \ldots, t_{T_{max}}^{SL}\right)$, where $0 \leq t_i^{SL} < 10240$. The subframe index is relative to subframe #0 of the radio frame corresponding to SFN 0 of the serving cell or DFN 0.

The set of subframes includes all the subframes except: subframes in which sidelink synchronization signal (SLSS) resources are configured, downlink (DL) subframes and special subframes in a time division duplexing (TDD) system, and reserved subframes.

The terminal device determines a set of subframes assigned to the PSSCH resource pool as follows. The terminal device determines time-domain resources of the PSSCH resource pool according to a bitmap $(b_0, b_1, \ldots, b_{L_{bitmap}})$. If $b_{k'} = 1$, subframe $t_k^{SL}\left(0 \leq k < \left(10240 - N_{slss} - N_{dssf} - N_{reserved}\right)\right)$ belongs to the resource pool, where $k' = k \bmod L_{bitmap}$, and the length of the bitmap $L_{bitmap}$ is configured by a higher layer.

In LTE-V2X, a resource pool is determined in a system frame number (SFN) or direct frame number (DFN) period. One SFN period includes 10240 subframes which correspond to subframes 0, 1, 2, ..., 10239 respectively (also referred to as physical slots or physical subframes), synchronous subframes, DL subframes, special subframes (that is, DL subframes and special subframes in the TDD system), and reserved subframes are excluded, the remaining subframes are indexed as $\left(t_0^{SL}, t_1^{SL}, \ldots, t_{T_{max}}^{SL}\right)$ the number of the remaining subframes is divisible by $L_{bitmap}$, and the bitmap $(b_0, b_1, \ldots, b_{L_{bitmap}})$ is periodically repeated in the remaining subframes. If a bit is 1, it indicates that a subframe corresponding to the bit in the remaining subframes belongs to the resource pool, otherwise the subframe does not belong to the resource pool.

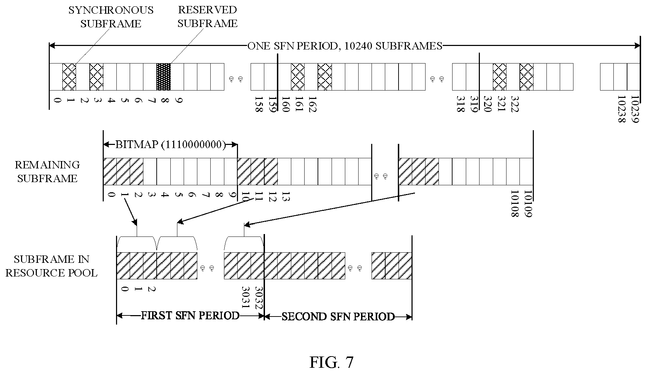

As illustrated in FIG. 7, one SFN period or DFN period includes 10240 subframes, a period of a synchronization signal is 160ms, and there are two synchronization subframes in one synchronization period. Therefore, there are 128 synchronization subframes in one SFN period, the length of a bitmap indicating resource-pool time-domain resources is 10 bits, so two reserved subframes are required, and the number of remaining subframes is (10240-128-2=10110) which is divisible by the length of the bitmap (i.e., 10). The remaining subframes are re-indexed as 0, 1, 2, ..., 10109 and are also referred to as logical slots or logical subframes. The first three bits in the bitmap are 1, and the remaining seven bits are 0. That is, among the remaining subframes, the first three subframes out of every ten subframes belong to the resource pool, and the rest of the subframes do not belong to the resource pool. The bitmap needs to be repeated 1011 times in the remaining subframes to indicate whether each subframe belongs to the resource pool, and three subframes in each bitmap period belong to the resource pool. Therefore, a total of 3033 subframes belong to the resource pool in one SFN period.

In NR-V2X, resource allocation in mode 1 and mode 2 are supported. In mode 2 (i.e., the mode B mentioned above), the terminal autonomously selects transmission resources for SL transmission from a resource pool. In mode 1 (i.e., the mode A mentioned above), the network allocates SL transmission resources for the terminal. Specifically, the network device can allocate SL transmission resources to the terminal through dynamic scheduling (DG), or the network can allocate to the terminal SL configured grant (CG) transmission resources (also referred to as SL grant-free transmission resources). There are mainly two CG manners for SL CG: type-1 SL CG and type-2 SL CG.

Type-1 SL CG: The network device configures SL transmission resources for the terminal through a radio resource control (RRC) signaling. All transmission resources and transmission parameters including time-domain resources, frequency-domain resources, a demodulation reference signal (DMRS), a modulation and coding scheme (MCS), and the like are configured through the RRC signaling. The terminal device can perform SL transmission on the configured time-frequency resources with the configured transmission parameters upon receiving the high-layer parameters.

Type-2 SL CG: A two-step resource configuration manner, that is, an RRC+DCI manner is adopted. First, transmission resources and transmission parameters including a period of time-frequency resources, a redundancy version, the number of retransmissions, a hybrid automatic repeat request (HARQ) process number, and the like are configured through a RRC signaling. Then, transmission of the type-2 SL CG is activated through downlink control information (DCI), and other transmission resources and transmission parameters including time-domain resources, frequency-domain resources, a MCS and the like are configured through the DCI. When receiving the RRC signaling, the terminal device cannot perform SL transmission immediately with the resources and parameters configured by the higher-layer parameter, but needs to wait for a corresponding DCI for activating the SL CG and then performs SL transmission. In addition, the network can deactivate the SL CG through a DCI. After receiving the deactivating DCI, the terminal can no longer performs SL transmission with the SL CG transmission resource.

For type-1 SL CG, corresponding time-domain resources are determined according to the following formula 1:

[(SFN × *numberOfSLSlotsPerFrame*) + logical slot number in the frame] = (*timeReferenceSFN* × *numberOfSLSlotsPerFrame* + *sl-TimeOffsetCGTypeI*+ S × *PeriodicitySL*) modulo (1024 × *numberOfSLSlotsPerFrame*)     formula 1

$$PeriodicitySL = \left\lceil \frac{N}{20ms} \times sl\_periodCG \right\rceil$$

In formula 1, , *N* indicates the number of logical slots available for SL transmission within the time range of 20ms, and *sl_periodCG* indicates a period of the SL CG configured by the network, *numberOfSLSlotsPerFrame* indicates the number of logical slots available for SL transmission in one radio frame, "logical slot number in the frame" indicates the number of logical slots in the radio frame, *timeReferenceSFN* indicates a time reference SFN, *sl-TimeOffsetCGType1* indicates a time-domain offset of type-1 CG, and S indicates any integer.

For type-2 SL CG, corresponding time-domain resources are determined according to the following formula 2:

[(SFN × *numberOfSLSlotsPerFrame*) + logical slot number in the frame] = [(SFN$_{start\ time}$ × *numberOfSLSlotsPerFrame* + slot$_{sart\ time}$) + S × *PeriodicitySL]* modulo (1024 × *numberOfSLSlotsPerFrame*)     formula 2

$$PeriodicitySL = \left\lceil \frac{N}{20ms} \times sl\_periodCG \right\rceil$$

In formula 2, , *N* indicates the number of logical slots available for SL transmission within the time range of 20ms, and *sl_periodCG* indicates a period of the SL CG configured by the network, *numberOfSLSlotsPerFrame* indicates the number of logical slots available for SL transmission in one radio frame, SFN$_{start\ time}$ indicates a SFN corresponding to the first PSSCH transmission opportunity in the CG resource, slot$_{start\ time}$ indicates a logical slot corresponding to the first PSSCH transmission opportunity in the CG resource, *sl-TimeOffsetCGType1* indicates a time-domain offset of type-1 CG, and S indicates any integer.

However, there are the following three questions in formula 1 and formula 2 above.

$$PeriodicitySL = \left\lceil \frac{N}{20ms} \times sl\_periodCG \right\rceil$$

Question 1: In formula 1 and formula 2, , the parameter *PeriodicitySL* obtained through this formula includes all logical slots available for SL transmission (for example, corresponding to the second row in FIG. 7), the SL CG is configured in a certain resource pool (for example, corresponding to the third row in FIG. 7), and the length of the bitmap indicating resource-pool slots has a value selected from [10, 100] and may not have an integer multiple relationship with the number of slots within the time range of 20ms. Therefore, a slot determined according to formula 1 and formula 2 may not belong to the resource pool associated with the SL CG, and thus is not a time-domain transmission resource for SL CG.

Question 2: In formula 1 and formula 2, *numberOfSLSlotsPerFrame* indicates the number of logical slots available for SL transmission in one radio frame, but in the formula for period determination, the number is determined with a period of 20ms. 20ms includes two radio frames, and the number of logical slots available for SL transmission in each radio frame may be different. For example, there are ten logical slots available for SL transmission in 20ms, specifically, there are three logical slots in the first 10ms (one radio frame) and seven logical slots in the last 20ms (another radio frame). In this case, the value of *numberOfSLSlotsPerFrame* varies for different radio frames. How to determine the value and whether the value is 3 or 7 is a question.

Question 3: For SL CG, up to three transmission resources can be configured by the network device in each CG period. However, in the formula for SL CG transmission resource determination, only the first transmission resource in each period is considered. That is, only *sl-TimeOffsetCGType1* in type-1 SL CG and $\text{SFN}_{\text{start time}}$ and $\text{slot}_{\text{start time}}$ in type-2 SL CG are considered. Time-domain positions corresponding to the second or the third transmission resources are not considered.

Based on the above questions, the disclosure proposes a solution for SL CG resource determination to solve the above technical problems.

The technical solution of the disclosure is described in detail below with specific implementations.

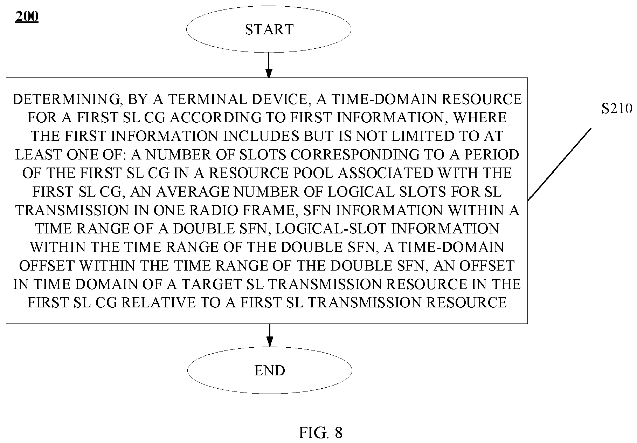

FIG. 8 is a schematic flowchart of a method 200 for SL CG resource determination according to implementations of the disclosure. As illustrated in FIG. 8, the method 200 may include at least part of the following content.

At S210, a terminal device determines a time-domain resource for a first SL CG according to first information, where the first information includes but is not limited to at least one of: a number of slots corresponding to a period of the first SL CG in a resource pool associated with the first SL CG, an average number of logical slots for SL transmission in one radio frame, SFN information within a time range of a double SFN, logical-slot information within the time range of the double SFN, a time-domain offset within the time range of the double SFN, and an offset in time domain of a target SL transmission resource in the first SL CG relative to a first SL transmission resource.

It should be noted that, in implementations of the disclosure, the time range of the double SFN may be a time range of 20ms.

Optionally, the first SL CG may be a type-1 SL CG, where the type-1 SL CG is a SL CG configured by a network device through a RRC signaling. For details, reference may be made to the relevant description about the type-1 SL CG above, which will not be repeated herein for the sake of simplicity.

Optionally, the first SL CG may also be a type-2 SL CG, where the type-2 SL CG is a SL CG configured by a network device through a RRC signaling and activated through a DCI. For details, reference may be made to the relevant description about the type-2 SL CG above, which will not be repeated herein for the sake of simplicity.

Optionally, as example 1, the first information includes the number of slots corresponding to the period of the first SL CG in the resource pool associated with the first SL CG. That is, the terminal device can determine the time-domain resource for the first SL CG according to the number of slots corresponding to the period of the first SL CG in the resource pool associated with the first SL CG.

Optionally, in example 1, the number of slots corresponding to the period of the first SL CG in the resource pool associated with the first SL CG is determined according to at least one of: a total length of a bitmap for configuring resource-pool time-domain resources, a number of first values in the bitmap for configuring resource-pool time-domain resources, and the period of the first SL CG configured by a network device.

Optionally, the resource pool associated with the first SL CG has a first value in the bitmap.

For example, the first value is 1.

Optionally, in example 1, the number of slots corresponding to the period of the first SL CG in the resource pool associated with the first SL CG can be obtained according to the following formula 3:

$$PeriodicitySL = \left\lceil \frac{N}{20ms} \times sl\_periodCG \times \frac{k}{L} \right\rceil \qquad \text{formula 3}$$

where N indicates the number of logical slots available for SL transmission within the time range of 20ms, *sl_periodCG* indicates the period of the first SL CG configured by the network, k indicates the number of bits "1" in the bitmap for configuring resource-pool time-domain resources, and L indicates the total length of the bitmap for configuring resource-pool time-domain resources.

Specifically, in example 1, the terminal device can obtain *PeriodicitySL* based on formula 3.

Further, when the first SL CG is a type-1 SL CG, the terminal device determines the time-domain resource for the first SL CG by substituting *PeriodicitySL* obtained through formula 3 into formula 1. Alternatively, when the first SL CG is a type-2 SL CG, the terminal device determines the time-domain resource for the first SL CG by substituting *PeriodicitySL* obtained through formula 3 into formula 2.

In example 1, if slot A is a transmission opportunity of the first SL CG, slot A+ *PeriodicitySL* also belongs to the resource pool corresponding to the first SL CG and is also a transmission opportunity of the first SL CG.

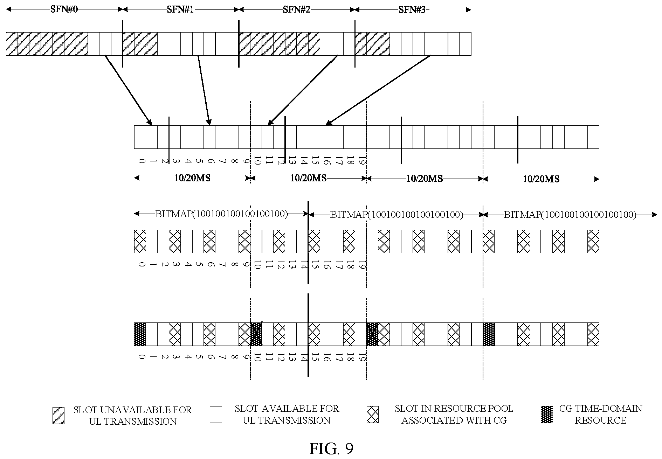

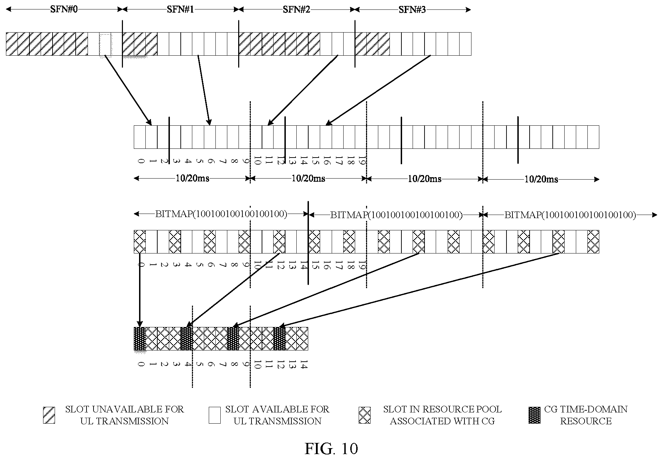

In example 1, for example, resources available for SL transmission in 20ms configured by the network device are illustrated in FIGs. 9 and 10. That is, there are three slots available for SL transmission in the first 10ms and seven slots available for SL transmission in the second 10ms. In this case, *N*=10. The length of the bitmap for configuring resource-pool time-domain resources is 15 bits. One bit "1" is set for every three bits. That is, 5 slots in every 15 slots available for SL transmission belong to the resource pool associated with the first SL CG.

For example, assuming that the first SL CG is a type-1 SL CG, and the period of the first SL CG is 20ms, according

$$PeriodicitySL = \left\lceil \frac{N}{20ms} \times sl\_periodCG \right\rceil$$

to , $PeriodicitySL$=10. If the network device configures $sl$-$TimeOffsetCGType1$=0, according to formula 1, logical slots 0, 10, 20, 30, ... are slots corresponding to the first SL CG. However, according to configuration information of the resource pool, slot 10 and slot 20 do not belong to the resource pool associated with the first SL CG. As illustrated in the fourth row in FIG. 9, the two slots (i.e., slot 10 and slot 20) are not time-domain transmission resources corresponding to the first SL CG, and thus are not transmission resources available for the first SL CG. Therefore, time-domain resources for the first SL CG determined according to formula

$$PeriodicitySL = \left\lceil \frac{N}{20ms} \times sl\_periodCG \right\rceil$$

are slots 0 and 30, and the interval between two adjacent time-domain resources for the first SL CG is 30 slots, that is, 30 ms, which is much larger than the period (10ms) of the first SL CG configured by the network device.

For another example, assuming that the first SL CG is a type-1 SL CG, and the period of the first SL CG is 20ms,

$$PeriodicitySL = \left\lceil \frac{N}{20ms} \times sl\_periodCG \times \frac{k}{L} \right\rceil$$

$L$=15, $k$=5, and $N$=10, according to , $PeriodicitySL$=4. That is, the period of the first SL CG is 4 slots, and the 4 slots are 4 slots in the resource pool associated with the first SL CG. If the network device configures $sl$-$TimeOffsetCGType1$=0, according to formula 1, logical slots 0, 4, 8, 12, ... in the resource pool are slots corresponding to the first SL CG and respectively correspond to logical slots 0, 12, 24, and 36 in a set of slots available for SL transmission. That is, the interval between two adjacent time-domain resources for the first SL CG is 12 slots, as illustrated in FIG. 10, which is closer to the real period (10ms) configured by the network device.

Therefore, in example 1, the period of the first SL CG configured by the network device is converted into the number of slots corresponding to the period of the first SL CG in the resource pool associated with the first SL CG through formula 3, so that slots belonging to the first SL CG are determined from the resource pool associated with the first SL CG according to the formula for transmission resource determination for first SL CG, thereby avoiding that a certain slot does not belong to the resource pool associated with the first SL CG.

Optionally, as example 2, the first information includes the average number of logical slots for SL transmission in one radio frame. That is, the terminal device can determine the time-domain resource for the first SL CG according to the average number of logical slots for SL transmission in one radio frame.

Optionally, in example 2, the average number of logical slots for SL transmission in one radio frame includes: an average of a number of logical slots for SL transmission in a first radio frame within the time range of the double SFN and a number of logical slots for SL transmission in a second radio frame within the time range of the double SFN.

In example 2, the average number of logical slots for SL transmission in one radio frame can be obtained according to the following formula 4:

$$averagenumberOfSLSlotsPerFrame = \left( numberOfSLSlotsFirstFrame + numberOfSLSlotsSecondFrame \right) / 2 \quad \text{formula 4}$$

where $averagenumberOfSLSlotsPerFrame$ indicates the average number of logical slots for SL transmission in one radio frame, $numberOfSLSlotsFirstFrame$ indicates the number of logical slots for SL transmission in the first radio frame within the time range of the double SFN, and $numberOfSLSlotsSecondFrame$ indicates the number of logical slots for SL transmission in the second radio frame within the time range of the double SFN.

It should be noted that, in example 2, the time-domain resource for the first SL CG can be determined by replacing $numberOfSLSlotsPerFrame$ in formula 1 and formula 2 with $averagenumberOfSLSlotsPerFrame$.

Therefore, in example 2, the time-domain resource for the first SL CG is determined based on the average number of logical slots for SL transmission in one radio frame, thereby avoiding that $numberOfSLSlotsPerFrame$ is different in each radio frame.

Optionally, as example 3, the first information includes: the SFN information within the time range of the double SFN, the logical-slot information within the time range of the double SFN, and the time-domain offset within the time range of the double SFN. That is, in example 3, the terminal device can determine the time-domain resource for the first SL CG according to the SFN information within the time range of the double SFN, the logical-slot information within the time range of the double SFN, and the time-domain offset within the time range of the double SFN.

Optionally, in example 3, the SFN information within the time range of the double SFN includes at least one of: a SFN index within the time range of the double SFN, a reference SFN index for determining the time-domain offset within the time range of the double SFN, and an index of a double SFN corresponding to a first transmission opportunity in the first SL CG.

Optionally, in example 3, the logical-slot information within the time range of the double SFN includes at least one of: a number of logical slots for SL transmission within the time range of the double SFN, an index of a logical slot for SL transmission within the time range of the double SFN, and an index of a logical slot within a time range of a double SFN corresponding to a first transmission opportunity in the first SL CG.

Optionally, in example 3, the time-domain offset within the time range of the double SFN includes one of: a time-domain offset relative to SFN=0 and a time-domain offset relative to a reference SFN index for determining the time-domain offset within the time range of the double SFN.

Optionally, in example 3, when the first SL CG is a type-1 SL CG, the terminal device can determine the time-domain resource for the first SL CG based on the following formula 5.

[(DoubleSFN $\times$ *numberOfSLSlotsPerDoubleFrame)* + logical slot number in the double frame] = *(time-ReferenceDoubleSFN $\times$ numberOfSLSlotsPerDoubleFrame + sl-TimeOffsetCGTypeI+ S $\times$ PeriodicitySL)* modulo (512 $\times$ *numberOfSLSlotsPerDoubleFrame)*     formula 5

In formula 5, DoubleSFN indicates the SFN index within the time range of the double SFN. For example, the range of the SFN index is [0,1023], that is, there are 1024 radio frames in 10240ms, and the range of DoubleSFN index is [0,511]. *numberOfSLSlotsPerDoubleFrame* indicates the number of logical slots for SL transmission within the time range of the double SFN, "logical slot number in the double frame" indicates the index of the logical slot for SL transmission within the time range of the double SFN, *sl-TimeOffsetCGType1* indicates the time-domain offset within the time range of the double SFN, *timeReferenceDoubleSFN* indicates the reference SFN index for determining the time-domain offset within the time range of the double SFN, *S* is any integer, $PeriodicitySL = \left\lceil \dfrac{N}{20ms} \times sl\_periodCG \right\rceil$ or

$$PeriodicitySL = \left\lceil \frac{N}{20ms} \times sl\_periodCG \times \frac{k}{L} \right\rceil$$

, *N* indicates the number of logical slots available for SL transmission within the time range of the double SFN, *sl_periodCG* indicates the period of the first SL CG configured by the network, k indicates the number of bits "1" in the bitmap for configuring resource-pool time-domain resources, and L indicates the total length of the bitmap for configuring resource-pool time-domain resources.

Optionally, in example 3, when the first SL CG is a type-2 SL CG, the terminal device can determine the time-domain resource for the first SL CG based on the following formula 6.

[(DoubleSFN $\times$ *numberOfSLSlotsPerDoubleFrame)* + logical slot number in the double frame] = [(DoubleSFN$_{start\ time}$ $\times$ *numberOfSLSlotsPerDoubleFrame* + slot$_{start\ time}$) + S $\times$ *PeriodicitySL]* modulo (512     formula 6 $\times$ *numberOfSLSlotsPerDoubleFrame)*

In formula 6, DoubleSFN indicates the SFN index within the time range of the double SFN. For example, the range of the SFN index is [0,1023], that is, there are 1024 radio frames in 10240ms, and the range of DoubleSFN index is [0,511]. *numberOfSLSlotsPerDoubleFrame* indicates the number of logical slots for SL transmission within the time range of the double SFN, "logical slot number in the double frame" indicates the index of the logical slot for SL transmission within the time range of the double SFN, DoubleSFN$_{start\ time}$ indicates the index of the double SFN corresponding to the first transmission opportunity in the first SL CG, slot$_{start\ time}$ indicates the index of the logical slot within the time range of the double SFN corresponding to the first transmission opportunity in the first SL CG, S is any integer,

$$PeriodicitySL = \left\lceil \frac{N}{20ms} \times sl\_periodCG \right\rceil \qquad PeriodicitySL = \left\lceil \frac{N}{20ms} \times sl\_periodCG \times \frac{k}{L} \right\rceil$$
or
, *N* indicates the number of logical slots available for SL transmission within the time range of the double SFN, *sl_periodCG* indicates the period of the first SL CG configured by the network, k indicates the number of bits "1" in the bitmap for configuring resource-pool time-domain resources, and L indicates the total length of the bitmap for configuring resource-pool time-domain resources.

Therefore, in example 3, the time-domain resource for the first SL CG is determined based on the time range of the double SFN, thereby avoiding that *numberOfSLSlotsPerFrame* is different in each radio frame.

Optionally, as example 4, the first information includes the offset in time domain of the target SL transmission resource in the first SL CG relative to the first SL transmission resource. That is, the terminal device can determine the time-domain resource for the first SL CG according to the offset in time domain of the target SL transmission resource in the first SL CG relative to the first SL transmission resource.

Optionally, in example 4, when the first SL CG is a type-1 SL CG, the terminal device can determine the time-domain resource for the first SL CG based on the following formula 7.

[(SFN × *numberOfSLSlotsPerFrame*) + logical slot number in the frame] = (*timeReferenceSFN × numberOfSLSlotsPerFrame + sl-TimeOffsetCGType1*+ *T* +S × *PeriodicitySL)* modulo (1024 × *numberOfSLSlotsPerFrame)*        formula 7

$$PeriodicitySL = \left\lceil \frac{N}{20ms} \times sl\_periodCG \right\rceil$$

In formula 7,          or

$$PeriodicitySL = \left\lceil \frac{N}{20ms} \times sl\_periodCG \times \frac{k}{L} \right\rceil$$, $N$ indicates the number of logical slots available for SL transmission within the time range of 20ms, $sl\_periodCG$ indicates the period of the SL CG configured by the network, k indicates the number of bits "1" in the bitmap for configuring resource-pool time-domain resources, L indicates the total length of the bitmap for configuring resource-pool time-domain resources, *numberOfSLSlotsPerFrame* indicates the number of logical slots available for SL transmission in one radio frame, "logical slot number in the frame" indicates the number of logical slots in the radio frame, *timeReferenceSFN* indicates a time reference SFN, *sl-TimeOffsetCGType1* indicates a time-domain offset of type-1 CG, $T$ indicates the offset in time domain of the target SL transmission resource in the first SL CG relative to the first SL transmission resource, and S indicates any integer.

Optionally, in example 4, when the first SL CG is a type-2 SL CG, the terminal device can determine the time-domain resource for the first SL CG based on the following formula 8.

[(SFN × *numberOfSLSlotsPerFrame*) + logical slot number in the frame] = [(SFN$_{start\ time}$ × *numberOfSLSlotsPerFrame* + slot$_{start\ time}$) + *T* + S × *PeriodicitySL*] modulo (1024 × *numberOfSLSlotsPerFrame)*        formula 8

$$PeriodicitySL = \left\lceil \frac{N}{20ms} \times sl\_periodCG \right\rceil$$

In formula 8,          or

$$PeriodicitySL = \left\lceil \frac{N}{20ms} \times sl\_periodCG \times \frac{k}{L} \right\rceil$$, $N$ indicates the number of logical slots available for SL transmission within the time range of 20ms, $sl\_periodCG$ indicates the period of the SL CG configured by the network, k indicates the number of bits "1" in the bitmap for configuring resource-pool time-domain resources, L indicates the total length of the bitmap for configuring resource-pool time-domain resources, *numberOfSLSlotsPerFrame* indicates the number of logical slots available for SL transmission in one radio frame, "logical slot number in the frame" indicates the number of logical slots in the radio frame, SFN$_{start\ time}$ indicates a SFN corresponding to the first PSSCH transmission opportunity in the CG resource, slot$_{start\ time}$ indicates a logical slot corresponding to the first PSSCH transmission opportunity in the CG resource, *sl-TimeOffsetCGType1* indicates a time-domain offset of type-1 CG, $T$ indicates the offset in time domain of the target SL transmission resource in the first SL CG relative to the first SL transmission resource, and S indicates any integer.

It should be noted that, in formula 7 and formula 8, when there is only one SL transmission resource in one period of the first SL CG, T=0, that is, the target SL transmission resource is the first SL transmission resource. When there are two SL transmission resources in one period of the first SL CG, for example, the two SL transmission resources correspond to slot t1 and slot t2 respectively, and the target SL transmission resource is the second SL transmission resource, in this case, T=t2-t1. That is, after determining slot t1 corresponding to the first SL transmission resource, the terminal device can determine slot t2 corresponding to the target SL transmission resource based on T. When there are three SL transmission resources in one period of the first SL CG, assuming that the three SL transmission resources correspond to slot t1, slot t2, and slot t3 respectively, for example, when the target SL transmission resource is the second SL transmission resource, T=t2-t1. That is, after determining slot t1 corresponding to the first SL transmission resource, the terminal device can determine slot t2 corresponding to the target SL transmission resource based on T. For another example, when the target SL transmission resource is the third SL transmission resource, T=t3-t1. That is, after determining slot t1 corresponding to the first SL transmission resource, the terminal device can determine slot t3 corresponding to the target SL transmission resource based on T.

Therefore, in example 4, the terminal device determines the time-domain resource for the first SL CG according to the offset in time domain of the target SL transmission resource in the first SL CG relative to the first SL transmission resource. That is, when there are multiple SL transmission resources in one period of the first SL CG, other SL transmission resources may be determined based on the offset.

It should be noted that, in the above four examples, the resource pool associated with the first SL CG has a value of 1 in the bitmap for configuring resource-pool time-domain resources.

Optionally, in implementations of the disclosure, the terminal device can determine the time-domain resource for the first SL CG in combination with solutions in the four examples.

Optionally, the terminal device can determine the time-domain resource for the first SL CG in combination with solutions in example 1 and example 2. For example, when the first SL CG is a type-1 SL CG, the terminal device can determine the time-domain resource for the first SL CG based on the following formula 9. For another example, when the first SL CG is a type-2 SL CG, the terminal device can determine the time-domain resource for the first SL CG based on the following formula 10.

[(SFN $\times$ *averagenumberOfSLSlotsPerFrame*) + logical slot number in the frame] = (*timeReferenceSFN* $\times$ *averagenumberOfSLSlotsPerFrame* + *sl-TimeOffsetCGType1*+ S $\times$ *PeriodicitySL)* modulo (1024 $\times$     formula 9 *averagenumberOfSLSlotsPerFrame*)

$$PeriodicitySL = \left\lceil \frac{N}{20ms} \times sl\_periodCG \times \frac{k}{L} \right\rceil$$

In formula 9,      and *averagenumberOfSLSlotsPerFrame* = (*numberOfSLSlotsFirstFrame* + *numberOfSLSlotsSecondFrame*) */2.* In addition, for other parameters in formula 9, reference may be made to the description in formula 1, which will not be repeated herein.

[(SFN $\times$ *averagenumberOfSLSlotsPerFrame*) + logical slot number in the frame] = [(SFN$_{\text{start time}}$ $\times$ *averagenumberOfSLSlotsPerFrame* + slot$_{\text{start time}}$) + S $\times$ *PeriodicitySL]* modulo *(1024 $\times$averagen-*     formula 10 *umberOfSLSlotsPerFrame*)

$$PeriodicitySL = \left\lceil \frac{N}{20ms} \times sl\_periodCG \times \frac{k}{L} \right\rceil$$

In formula 10,      and *averagenumberOfSLSlotsPer-Frame = (numberOfSLSlotsFirstFrame + numberOfSLSlotsSecondFrame)* / *2.* In addition, for other parameters in formula 10, reference may be made to the description in formula 2, which will not be repeated herein.

Optionally, the terminal device can determine the time-domain resource for the first SL CG in combination with solutions in example 1 and example 3. For example, when the first SL CG is a type-1 SL CG, the terminal device can determine the time-domain resource for the first SL CG based on the above formula 5, where

$$PeriodicitySL = \left\lceil \frac{N}{20ms} \times sl\_periodCG \times \frac{k}{L} \right\rceil$$

. For another example, when the first SL CG is a type-2 SL CG, the terminal device can determine the time-domain resource for the first SL CG based on the above formula 6, where

$$PeriodicitySL = \left\lceil \frac{N}{20ms} \times sl\_periodCG \times \frac{k}{L} \right\rceil$$

.

Optionally, the terminal device can determine the time-domain resource for the first SL CG in combination with solutions in example 1 and example 4. For example, when the first SL CG is a type-1 SL CG, the terminal device can determine the time-domain resource for the first SL CG based on the above formula 7, where

$$PeriodicitySL = \left\lceil \frac{N}{20ms} \times sl\_periodCG \times \frac{k}{L} \right\rceil$$

. For another example, when the first SL CG is a type-2 SL CG, the terminal device can determine the time-domain resource for the first SL CG based on the above formula 8, where

$$PeriodicitySL = \left\lceil \frac{N}{20ms} \times sl\_periodCG \times \frac{k}{L} \right\rceil$$

.

Optionally, the terminal device can determine the time-domain resource for the first SL CG in combination with solutions in example 2 and example 4. For example, when the first SL CG is a type-1 SL CG, the terminal device can determine the time-domain resource for the first SL CG based on the following formula 11. For another example, when the first SL CG is a type-2 SL CG, the terminal device can determine the time-domain resource for the first SL CG based on the following formula 12.

[(SFN $\times averagenumberOfSLSlotsPerFrame$) + logical slot number in the frame] = (*timeReferenceSFN* $\times averagenumberOfSLSlotsPerFrame + sl\text{-}TimeOffsetCGTypeI+$ **T** +S $\times$ *PeriodicitySL)* modulo (1024 $\times averagenumberOfSLSlotsPerFrame$)     formula 11

In formula 11, *averagenumberOfSLSlotsPerFrame* = (*numberOfSLSlotsFirstFrame* + *numberOfSLSlotsSecondFrame*) / 2 . In addition, for other parameters in formula 11, reference may be made to the description in formula 7, which will not be repeated herein.

[(SFN $\times averagenumberOfSLSlotsPerFrame$) + logical slot number in the frame] = [(SFN$_{start\ time}$ $\times averagenumberOfSLSlotsPerFrame$ + slot$_{start\ time}$) + T+ S $\times$ *PeriodicitySL]* modulo (1024 $\times avera$-     formula 12 *genumberOfSLSlotsPerFrame*)

In formula 12, *averagenumberOfSLSlotsPerFrame* = (*numberOfSLSlotsFirstFrame* + *numberOfSLSlotsSecondFrame*) / 2. In addition, for other parameters in formula 12, reference may be made to the description in formula 8, which will not be repeated herein.
Optionally, the terminal device can determine the time-domain resource for the first SL CG in combination with solutions in example 3 and example 4. For example, when the first SL CG is a type-1 SL CG, the terminal device can determine the time-domain resource for the first SL CG based on the following formula 13. For another example, when the first SL CG is a type-2 SL CG, the terminal device can determine the time-domain resource for the first SL CG based on the following formula 14.

[(DoubleSFN $\times$ *numberOfSLSlotsPerDoubleFrame)* + logical slot number in the double frame] = (*timeReferenceDoubleSFN* $\times$ *numberOfSLSlotsPerDoubleFrame* + *sl-TimeOffsetCGTypeI+* **T** + S $\times$ *PeriodicitySL)* modulo (512 $\times$ *numberOfSLSlotsPerDoubleFrame)*     formula 13

In formula 13, T indicates the offset in time domain of the target SL transmission resource in the first SL CG relative to the first SL transmission resource, and other parameters can refer to the relevant description in formula 5, which will not be repeated herein.

[(DoubleSFN $\times$ *numberOfSLSlotsPerDoubleFrame)* + logical slot number in the double frame] = [(DoubleSFN$_{start\ time}$ $\times$ *numberOfSLSlotsPerDoubleFrame* + slot$_{start\ time}$) + **T** + S $\times$ *PeriodicitySL]* modulo (512 $\times$ *numberOfSLSlotsPerDoubleFrame)*     formula 14

In formula 14, T indicates the offset in time domain of the target SL transmission resource in the first SL CG relative to the first SL transmission resource, and other parameters can refer to the relevant description in formula 6, which will not be repeated herein.
Optionally, the terminal device can determine the time-domain resource for the first SL CG in combination with solutions in example 1, example 2, and example 4. For example, when the first SL CG is a type-1 SL CG, the terminal device can determine the time-domain resource for the first SL CG based on the following formula 15. For another example, when the first SL CG is a type-2 SL CG, the terminal device can determine the time-domain resource for the first SL CG based on the following formula 16.

[(SFN $\times averagenumberOfSLSlotsPerFrame$) + logical slot number in the frame] = (*timeReferenceSFN* $\times averagenumberOfSLSlotsPerFrame + sl\text{-}TimeOffsetCGTypeI+$ **T** + S $\times$ *PeriodicitySL)* modulo (1024 $\times averagenumberOfSLSlotsPerFrame$)     formula 15

$$PeriodicitySL = \left\lceil \frac{N}{20ms} \times sl\_periodCG \times \frac{k}{L} \right\rceil$$

In formula 15, and *averagenumberOfSLSlotsPer-Frame* = (*numberOfSLSlotsFirstFrame* + *numberOfSLSlotsSecondFrame*) / 2. In addition, for other parameters in formula 15, reference may be made to the description in formula 7, which will not be repeated herein.

[(SFN $\times$*averagenumberOfSLSlotsPerFrame*) + logical slot number in the frame] = [(SFN$_{start\ time}$ $\times$*averagenumberOfSLSlotsPerFrame* + slot$_{start\ time}$) + **T** + S $\times$ *PeriodicitySL]* modulo (1024 $\times$*avera-genumberOfSLSlotsPerFrame*)          formula 16

$$PeriodicitySL = \left\lceil \frac{N}{20ms} \times sl\_periodCG \times \frac{k}{L} \right\rceil$$

In formula 16, and *averagenumberOfSLSlotsPer-Frame* = (*numberOfSLSlotsFirstFrame* + *numberOfSLSlotsSecondFrame*) / 2. In addition, for other parameters in formula 16, reference may be made to the description in formula 8, which will not be repeated herein.

Optionally, the terminal device can determine the time-domain resource for the first SL CG in combination with solutions in example 1, example 3, and example 4. For example, when the first SL CG is a type-1 SL CG, the terminal device can determine the time-domain resource for the first SL CG based on formula 13, where

$$PeriodicitySL = \left\lceil \frac{N}{20ms} \times sl\_periodCG \times \frac{k}{L} \right\rceil$$

. For another example, when the first SL CG is a type-2 SL CG, the terminal device can determine the time-domain resource for the first SL CG based on the following formula 14, where

$$PeriodicitySL = \left\lceil \frac{N}{20ms} \times sl\_periodCG \times \frac{k}{L} \right\rceil$$

.

Optionally, in implementations of the disclosure, for type-1 SL CG, the network device may also configure through a RRC signaling at least one of: a SL CG index (*sl-ConfigIndexCG),* a configured scheduling radio network temporary identity (CS-RNTI) for SL transmission (*sl-CS-RNTI*), a HARQ process number for CG *(nrofHARQ-Processes),* a period of type-1 SL CG *(sl-periodCG),* an offset of a time-domain resource with respect to SFN=0 of type-1 SL CG (*sl-TimeOffsetCGType1*), a location of a time-domain resource with respect to SFN=0 of type-1 SL CG (*sl-TimeResourceCGTypel),* the maximum number of times that a transport block (TB) can be transmitted using a CG *(sl-CG-MaxTransNumList),* and an offset of a HARQ process for type-1 SL CG (*sl-harq-procID-offset*).

Optionally, in implementations of the disclosure, for type-2 SL CG, the network device may also configure through a RRC signaling at least one of: a SL CG index (*sl-ConfigIndexCG),* a CS-RNTI for SL transmission (*sl-CS-RNTI*), a HARQ process number for CG *(nrofHARQ-Processes),* a period of type-2 SL CG *(sl-periodCG),* the maximum number of times that a TB can be transmitted using a CG *(sl-CG-MaxTransNumList),* and an offset of a HARQ process for type-2 SL CG *(sl-harq-procID-offset*).

Therefore, in implementations of the disclosure, the terminal device determines the time-domain resource for the first SL CG according to the number of slots corresponding to the period of the first SL CG in the resource pool associated with the first SL CG, so that the time-domain resource for the first SL CG is indexed in the resource pool associated with the first SL CG, thereby avoiding that a certain slot does not belong to the resource pool associated with the first SL CG.

Alternatively, the terminal device determines the time-domain resource for the first SL CG based on the time range of the double SFN, thereby avoiding that the number of logical slots for SL transmission in one radio frame is different from another radio frame.

Alternatively, the terminal device determines the time-domain resource for the first SL CG according to the offset in time domain of the target SL transmission resource in the first SL CG relative to the first SL transmission resource. That is, when there are multiple SL transmission resources in one period of the first SL CG, other SL transmission resources may be determined based on the offset.

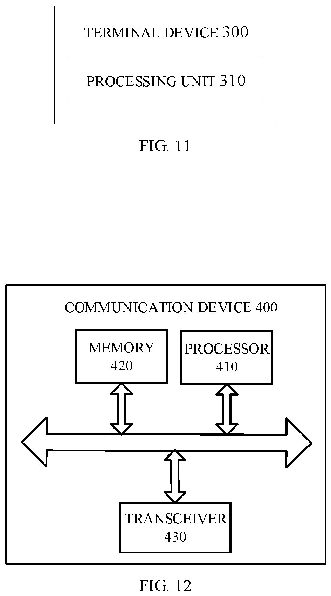

Method implementations of the disclosure are described in detail above with reference to FIGs. 8 to 10, and apparatus implementations of the disclosure are described in detail below with reference to FIGs. 11 to 14. It should be understood that, apparatus implementations correspond to method implementations, and similar description can refer to method implementations.

FIG. 11 illustrates a schematic block diagram of a terminal device 300 according to implementations of the disclosure. As illustrated in FIG. 11, the terminal device 300 includes a processing unit 310. The processing unit 310 is configured to determine a time-domain resource for a first SL CG according to first information, where the first information includes at least one of: a number of slots corresponding to a period of the first SL CG in a resource pool associated with the first SL CG, an average number of logical slots for SL transmission in one radio frame, SFN information within a time range of a double SFN, logical-slot information within the time range of the double SFN, a time-domain offset within the time range of the double SFN, and an offset in time domain of a target SL transmission resource in the first SL CG relative to a first SL transmission resource.

Optionally, the number of slots corresponding to the period of the first SL CG in the resource pool associated with the first SL CG is determined according to at least one of: a total length of a bitmap for configuring resource-pool time-domain resources, a number of first values in the bitmap for configuring resource-pool time-domain resources, and the period of the first SL CG configured by a network device.

Optionally, the resource pool associated with the first SL CG has a first value in the bitmap.

Optionally, the first value is 1.

Optionally, the average number of logical slots for SL transmission in one radio frame includes: an average of a number of logical slots for SL transmission in a first radio frame within the time range of the double SFN and a number of logical slots for SL transmission in a second radio frame within the time range of the double SFN.

Optionally, the SFN information within the time range of the double SFN includes at least one of: a SFN index within the time range of the double SFN, a reference SFN index for determining the time-domain offset within the time range of the double SFN, and an index of a double SFN corresponding to a first transmission opportunity in the first SL CG.

Optionally, the logical-slot information within the time range of the double SFN includes at least one of: a number of logical slots for SL transmission within the time range of the double SFN, an index of a logical slot for SL transmission within the time range of the double SFN, and an index of a logical slot within a time range of a double SFN corresponding to a first transmission opportunity in the first SL CG.

Optionally, the time-domain offset within the time range of the double SFN includes one of: a time-domain offset relative to SFN=0 and a time-domain offset relative to a reference SFN index for determining the time-domain offset within the time range of the double SFN.

Optionally, there are two SL transmission resources in one period of the first SL CG, and the target SL transmission resource is a second SL transmission resource among the two SL transmission resources, or there are three SL transmission resources in one period of the first SL CG, and the target SL transmission resource is a second SL transmission resource or a third SL transmission resource among the two SL transmission resources.

Optionally, the first SL CG is a type-1 SL CG, where the type-1 SL CG is a SL CG configured by a network device through a RRC signaling, or the first SL CG is a type-2 SL CG, where the type-2 SL CG is a SL CG configured by a network device through a RRC signaling and activated through a DCI.

Optionally, in some implementations, the processing unit may be one or more processors.

It should be understood that, the terminal device 300 according to the implementation of the disclosure may correspond to a terminal device in method implementations of the disclosure. The above-mentioned and other operations and/or functions of each unit in the terminal device 300 are respectively intended for implementing corresponding procedures of the terminal device in the method 200 illustrated in FIG. 8, which will not be repeated herein for the sake of simplicity.

FIG. 12 is a schematic structural diagram of a communication device 400 provided in an implementation of the disclosure. As illustrated in FIG. 12, the communication device 400 includes a processor 410. The processor 410 can invoke and execute computer programs stored in a memory to perform the method provided in implementations of the disclosure.

Optionally, as illustrated in FIG. 12, the communication device 400 can further include the memory 420. The processor 410 can invoke and execute the computer programs stored in the memory 420 to perform the method provided in implementations of the disclosure.

The memory 420 may be a separate device independent of the processor 410, or may be integrated into the processor 410.

Optionally, as illustrated in FIG. 12, the communication device 400 can further include a transceiver 430. The processor 410 can control the transceiver 430 to communicate with other devices, for example, to transmit information or data to other devices, or to receive information or data from other devices.

The transceiver 430 may include a transmitter and a receiver. The transceiver 430 may further include an antenna, where one or more antenna can be provided.

Optionally, the communication device 400 may be the network device in implementations of the disclosure, and the communication device 400 can implement the corresponding procedures performed by the network device described in the foregoing method implementations, which will not be repeated herein for the sake of simplicity.

Optionally, the communication device 400 may be the mobile terminal/terminal device in implementations of the disclosure, and the communication device 400 can implement the corresponding procedures performed by the mobile terminal/terminal device described in the foregoing method implementations, which will not be repeated herein for the sake of simplicity.

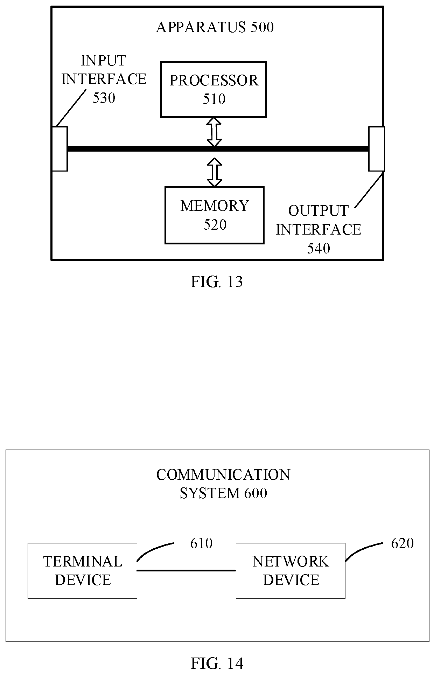

FIG. 13 is a schematic structural diagram of an apparatus according to an implementation of the disclosure. As illustrated in FIG. 13, the apparatus 500 includes a processor 510. The processor 510 is configured to invoke and execute computer programs stored in a memory to perform the method provided in implementations of the disclosure.

Optionally, as illustrated in FIG. 13, the apparatus 500 further includes the memory 520. The processor 510 can invoke and execute the computer programs stored in the memory 520 to perform the method provided in implementations of the disclosure.

The memory 520 may be a separate device independent of the processor 510, or may be integrated into the processor 510.

Optionally, the apparatus 500 may further include an input interface 530. The processor 510 can control the input interface 530 to communicate with other devices or chips, for example, to acquire information or data transmitted by other devices or chips.

Optionally, the apparatus 500 may further include an output interface 540. The processor 510 can control the output interface 540 to communicate with other devices or chips, for example, to output information or data to other devices or chips.

Optionally, the apparatus is applicable to the network device in implementations of the disclosure, and the apparatus can implement the corresponding procedures performed by the network device described in the foregoing method implementations, which will not be repeated herein for the sake of simplicity.

Optionally, the apparatus is applicable to the mobile terminal/terminal device in implementations of the disclosure, and the apparatus can implement the corresponding procedures performed by the mobile terminal/terminal device described in the foregoing method implementations, which will not be repeated herein for the sake of simplicity.

Optionally, the apparatus mentioned in implementations of the disclosure may also be a chip, for example, may be a system-level chip, a system chip, a chip system, or an on-chip system chip.

FIG. 14 is a schematic block diagram of a communication system 600 provided in an implementation of the disclosure. As illustrated in FIG. 14, the communication system 600 includes a terminal device 610 and a network device 620.

The terminal device 610 may be configured to implement the corresponding functions implemented by a terminal device in the above methods, and the network device 620 may be configured to implement the corresponding functions implemented by a network device in the above methods, which will not be repeated herein for the sake of simplicity.

It should be understood that, the processor referred to herein may be an integrated circuit chip with signal processing capabilities. During implementation, each step of the foregoing method may be completed by an integrated logic circuit in the form of hardware or an instruction in the form of software in the processor. The processor may be a general-purpose processor, a digital signal processor (DSP), an application specific integrated circuit (ASIC), a field programmable gate array (FPGA), or other programmable logic devices, discrete gates or transistor logic devices, or discrete hardware components, which can implement or perform the methods, steps, and logic blocks disclosed in implementations. The general purpose processor may be a microprocessor, or the processor may be any conventional processor or the like. The steps of the method disclosed in implementations may be implemented through a hardware decoding processor, or may be performed by hardware and software modules in the decoding processor. The software module can be located in a storage medium such as a random access memory (RAM), a flash memory, a read only memory (ROM), a programmable ROM (PROM), or an electrically erasable programmable memory, registers, and the like. The storage medium is located in the memory. The processor reads the information in the memory, and completes the steps of the method described above with the hardware of the processor.

It can be understood that, the memory according to implementations of the disclosure may be a volatile memory or a non-volatile memory, or may include both the volatile memory and the non-volatile memory. The non-volatile memory may be a ROM, a PROM, an erasable programmable read only memory (erasable PROM, EPROM), an electrically erasable programmable read only memory (electrically EPROM, EEPROM), or a flash memory. The volatile memory can be a RAM that acts as an external cache. By way of example but not limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchronous link dynamic random access memory (synch-link DRAM, SLDRAM), and a direct rambus RAM (DRRAM). It should be noted that, the memory of systems and methods described herein is intended to include, but is not limited to, these and any other suitable types of memories.

It should be understood that, the above description of the memory is intended for illustration rather than limitation. For example, the memory of implementations may also be an SRAM, a DRAM, an SDRAM, a DDR SDRAM, an ESDRAM, an SLDRAM, a DR RAM, etc. In other words, the memory of implementations is intended to include, but is not limited to, these and any other suitable types of memory.

Implementations of the disclosure further provide a computer-readable storage medium. The computer-readable storage medium is configured to store computer programs.

Optionally, the computer-readable storage medium is applicable to the network device of implementations of the disclosure. The computer programs are operable with a computer to implement the corresponding procedures performed by the network device described in the foregoing method implementations, which will not be repeated herein for the sake of simplicity.

Optionally, the computer-readable storage medium is applicable to the mobile terminal/terminal device of implementations of the disclosure. The computer programs are operable with a computer to implement the corresponding procedures performed by the mobile terminal/terminal device described in the foregoing method implementations, which will not be repeated herein for the sake of simplicity.

Implementations of the disclosure further provide a computer program product. The computer program product includes computer program instructions.

Optionally, the computer program product is applicable to the network device of implementations of the disclosure. The computer program instructions are operable with a computer to implement the corresponding procedures by the network device described in the foregoing method implementations, which will not be repeated herein for the sake of simplicity.

Optionally, the computer program product is applicable to the mobile terminal/terminal device of implementations of the disclosure. The computer program instructions are operable with a computer to implement the corresponding procedures performed by the mobile terminal/terminal device described in the foregoing method implementations, which will not be repeated herein for the sake of simplicity.

Implementations of the disclosure further provide a computer program.

Optionally, the computer program is applicable to the network device of implementations of the disclosure. The computer program, when executed by a computer, is operable with the computer to implement the corresponding procedures performed by the network device described in the foregoing method implementations, which will not be repeated herein for the sake of simplicity.

Optionally, the computer program is applicable to the mobile terminal/terminal device of implementations of the disclosure. The computer program, when executed by a computer, is operable with the computer to implement the corresponding procedures performed by the mobile terminal/terminal device described in the foregoing method implementations, which will not be repeated herein for the sake of simplicity.

Those of ordinary skill in the art will appreciate that units and algorithmic operations of various examples described in connection with implementations of the disclosure can be implemented by electronic hardware or by a combination of computer software and electronic hardware. Whether these functions are performed by means of hardware or software depends on the application and the design constraints of the associated technical solution. Those skilled in the art may use different methods with regard to each particular application to implement the described functionality, but such methods should not be regarded as lying beyond the scope of the disclosure.

It will be evident to those skilled in the art that, for the sake of convenience and simplicity, in terms of the working processes of the foregoing systems, apparatuses, and units, reference can be made to the corresponding processes of the above method implementations, which will not be repeated herein.

It will be appreciated that the systems, apparatuses, and methods disclosed in implementations of the disclosure may also be implemented in various other manners. For example, the above apparatus implementations are merely illustrative, e.g., the division of units is only a division of logical functions, and other manners of division may also available in practice, e.g., multiple units or assemblies may be combined or may be integrated into another system, or some features may be ignored or omitted. In other respects, the coupling or direct coupling or communication connection as illustrated or discussed may be an indirect coupling or communication connection through some interface, device, or unit, and may be electrical, mechanical, or otherwise.

Separated units as illustrated may or may not be physically separated. Components or parts displayed as units may or may not be physical units, and may reside at one location or may be distributed to multiple networked units. Some or all of the units may be selectively adopted according to practical needs to achieve desired objectives of the disclosure.

In addition, various functional units described in implementations of the disclosure may be integrated into one processing unit or may be present as a number of physically separated units, and two or more units may be integrated into one.

If the integrated units are implemented as software functional units and sold or used as standalone products, they may be stored in a computer-readable storage medium. For such an understanding, the essential technical solution, or the portion that contributes to the prior art, or part of the technical solution of the disclosure may be embodied as software products. The computer software products can be stored in a storage medium and may include multiple instructions that, when executed, can cause a computing device, e.g., a personal computer, a server, a network device, etc., to execute some or all operations of the methods described in various implementations. The above storage medium may include various kinds of media that can store program codes, such as a universal serial bus (USB) flash disk, a mobile hard drive, a ROM, a RAM, a magnetic disk, or an optical disk.

**EP 4 192 143 B1**

**Claims**

1. A method for sidelink, SL, configured grant, CG, resource determination, comprising:

   determining, by a terminal device, a time-domain resource for a first SL CG according to at least one of: a number of slots corresponding to a period of the first SL CG in a resource pool associated with the first SL CG and an offset in time domain of a target SL transmission resource in the first SL CG relative to a first SL transmission resource, wherein the number of slots corresponding to the period of the first SL CG in the resource pool associated with the first SL CG is determined according to at least one of:

   a total length of a bitmap for configuring resource-pool time-domain resources, a number of bits with a first value in the bitmap for configuring resource-pool time-domain resources, and the period of the first SL CG configured by a network device.

2. The method of claim 1, wherein the resource pool associated with the first SL CG has the first value in the bitmap.

3. The method of claim 1 or 2, wherein the first value is 1.

4. The method of claim 1, wherein

   there are two SL transmission resources in one period of the first SL CG, and the target SL transmission resource is a second SL transmission resource among the two SL transmission resources; or
   there are three SL transmission resources in one period of the first SL CG, and the target SL transmission resource is a second SL transmission resource or a third SL transmission resource among the three SL transmission resources.

5. The method of any of claims 1 to 4, wherein

   the first SL CG is a type-1 SL CG, wherein the type-1 SL CG is a SL CG configured by the network device through a radio resource control, RRC, signaling; or
   the first SL CG is a type-2 SL CG, wherein the type-2 SL CG is a SL CG configured by the network device through a RRC signaling and activated through downlink control information, DCI.

6. A terminal device (300), comprising:

   a processing unit (310) configured to determine a time-domain resource for a first sidelink, SL, configured grant, CG, according to at least one of: a number of slots corresponding to a period of the first SL CG in a resource pool associated with the first SL CG and an offset in time domain of a target SL transmission resource in the first SL CG relative to a first SL transmission resource, wherein the number of slots corresponding to the period of the first SL CG in the resource pool associated with the first SL CG is determined according to at least one of:

   a total length of a bitmap for configuring resource-pool time-domain resources, a number of bits with a first value in the bitmap for configuring resource-pool time-domain resources, and the period of the first SL CG configured by a network device.

7. The terminal device (300) of claim 6, wherein the resource pool associated with the first SL CG has the first value in the bitmap.

8. The terminal device (300) of claim 6 or 7, wherein the first value is 1.

9. The terminal device (300) of claim 6, wherein

   there are two SL transmission resources in one period of the first SL CG, and the target SL transmission resource is a second SL transmission resource among the two SL transmission resources; or
   there are three SL transmission resources in one period of the first SL CG, and the target SL transmission resource is a second SL transmission resource or a third SL transmission resource among the three SL transmission resources.

10. The terminal device (300) of any of claims 6 to 9, wherein

    the first SL CG is a type-1 SL CG, wherein the type-1 SL CG is a SL CG configured by the network device through a radio resource control, RRC, signaling; or

18

the first SL CG is a type-2 SL CG, wherein the type-2 SL CG is a SL CG configured by the network device through a RRC signaling and activated through downlink control information, DCI.

11. A communication device (400), comprising:

a memory (420) configured to store computer programs; and
a processor (410) configured invoke and execute the computer programs stored in the memory to perform the method of any of claims 1 to 5.

12. A computer-readable storage medium storing computer programs which are operable with a computer to perform the method of any of claims 1 to 10.

**Patentansprüche**

1. Verfahren zur Bestimmung einer Ressource für eine konfigurierte Sidelink-Freigabe, SL-CG, umfassend:
Bestimmen einer Zeitdomänenressource für eine erste SL-CG durch eine Endgerätevorrichtung gemäß mindestens einem von Folgenden: einer Anzahl von Schlitzen, die einer Periode der ersten SL-CG in einem Ressourcenpool entspricht, der mit der ersten SL-CG assoziiert ist, und einem Offset in der Zeitdomäne einer Ziel-SL-Übertragungsressource in der ersten SL-CG relativ zu einer ersten SL-Übertragungsressource, wobei die Anzahl von Schlitzen, die der Periode der ersten SL-CG in dem mit der ersten SL-CG assoziierten Ressourcenpool entspricht, gemäß mindestens einem von Folgenden bestimmt wird:
einer Gesamtlänge einer Bitmap zum Konfigurieren von Ressourcenpool-Zeitdomänenressourcen, einer Anzahl von Bits mit einem ersten Wert in der Bitmap zum Konfigurieren von Ressourcenpool-Zeitdomänenressourcen und der Periode der ersten SL-CG, die von einer Netzwerkvorrichtung konfiguriert wird.

2. Verfahren nach Anspruch 1, wobei der mit der ersten SL-CG assoziierte Ressourcenpool den ersten Wert in der Bitmap aufweist.

3. Verfahren nach Anspruch 1 oder 2, wobei der erste Wert 1 ist.

4. Verfahren nach Anspruch 1, wobei

zwei SL-Übertragungsressourcen in einer Periode der ersten SL-CG vorhanden sind und die Ziel-SL-Übertragungsressource eine zweite SL-Übertragungsressource unter den zwei SL-Übertragungsressourcen ist; oder
drei SL-Übertragungsressourcen in einer Periode der ersten SL-CG vorhanden sind und die Ziel-SL-Übertragungsressource eine zweite SL-Übertragungsressource oder eine dritte SL-Übertragungsressource unter den drei SL-Übertragungsressourcen ist.

5. Verfahren nach einem der Ansprüche 1 bis 4, wobei

die erste SL-CG eine Typ-1-SL-CG ist, wobei die Typ-1-SL-CG eine SL-CG ist, die von der Netzwerkvorrichtung über eine Funkressourcensteuerungssignalisierung, RRC-Signalisierung, konfiguriert wird; oder
die erste SL-CG eine Typ-2-SL-CG ist, wobei die Typ-2-SL-CG eine SL-CG ist, die von der Netzwerkvorrichtung über eine RRC-Signalisierung konfiguriert und über Downlink-Steuerinformationen, DCI, aktiviert wird.

6. Endgerätevorrichtung (300), umfassend:
eine Verarbeitungseinheit (310), die zum Bestimmen einer Zeitdomänenressource für eine erste konfigurierte Sidelink-Freigabe, SL-CG, gemäß mindestens einem von Folgenden konfiguriert ist: einer Anzahl von Schlitzen, die einer Periode der ersten SL-CG in einem Ressourcenpool entspricht, der mit der ersten SL-CG assoziiert ist, und einem Offset in der Zeitdomäne einer Ziel-SL-Übertragungsressource in der ersten SL-CG relativ zu einer ersten SL-Übertragungsressource, wobei die Anzahl von Schlitzen, die der Periode der ersten SL-CG in dem mit der ersten SL-CG assoziierten Ressourcenpool entspricht, gemäß mindestens einem von Folgenden bestimmt wird:
einer Gesamtlänge einer Bitmap zum Konfigurieren von Ressourcenpool-Zeitdomänenressourcen, einer Anzahl von Bits mit einem ersten Wert in der Bitmap zum Konfigurieren von Ressourcenpool-Zeitdomänenressourcen und der Periode der ersten SL-CG, die von einer Netzwerkvorrichtung konfiguriert wird.

7. Endgerätevorrichtung (300) nach Anspruch 6, wobei der mit der ersten SL-CG assoziierte Ressourcenpool den ersten Wert in der Bitmap aufweist.

**8.** Endgerätevorrichtung (300) nach Anspruch 6 oder 7, wobei der erste Wert 1 ist.

**9.** Endgerätevorrichtung (300) nach Anspruch 6, wobei

zwei SL-Übertragungsressourcen in einer Periode der ersten SL-CG vorhanden sind und die Ziel-SL-Übertragungsressource eine zweite SL-Übertragungsressource unter den zwei SL-Übertragungsressourcen ist; oder drei SL-Übertragungsressourcen in einer Periode der ersten SL-CG vorhanden sind und die Ziel-SL-Übertragungsressource eine zweite SL-Übertragungsressource oder eine dritte SL-Übertragungsressource unter den drei SL-Übertragungsressourcen ist.

**10.** Endgerätevorrichtung (300) nach einem der Ansprüche 6 bis 9, wobei:
die erste SL-CG eine Typ-1-SL-CG ist, wobei die Typ-1-SL-CG eine SL-CG ist, die von der Netzwerkvorrichtung über eine Funkressourcensteuerungssignalisierung, RRC-Signalisierung, konfiguriert wird; oder
die erste SL-CG eine Typ-2-SL-CG ist, wobei die Typ-2-SL-CG eine SL-CG ist, die von der Netzwerkvorrichtung über eine RRC-Signalisierung konfiguriert und über Downlink-Steuerinformationen, DCI, aktiviert wird.

**11.** Kommunikationsvorrichtung (400), umfassend:

einen Speicher (420), der zum Speichern von Computerprogrammen konfiguriert ist; und
einen Prozessor (410), der zum Aufrufen und Ausführen der im Speicher gespeicherten Computerprogramme konfiguriert ist, um das Verfahren nach einem der Ansprüche 1 bis 5 durchzuführen.

**12.** Computerlesbares Speichermedium, das Computerprogramme speichert, die mit einem Computer ausgeführt werden können, um das Verfahren nach einem der Ansprüche 1 oder 10 durchzuführen.

**Revendications**

**1.** Procédé de détermination de ressources d'attribution configurée, CG, de liaison latérale, SL, comprenant :
la détermination, par un dispositif terminal, d'une ressource temps-domaine pour une première CG SL selon au moins un élément parmi : un nombre d'intervalles correspondant à une période de la première CG SL dans un groupe de ressources associé à la première CG SL et un décalage de domaine temporel d'une ressource de transmission SL cible dans la première CG SL par rapport à une première ressource de transmission SL, dans lequel le nombre d'intervalles correspondant à la période de la première CG SL dans le groupe de ressources associé à la première CG SL est déterminé en fonction d'au moins un élément parmi :
une longueur totale d'une table de bits pour configurer des ressources temps-domaine de groupe de ressources, un nombre de bits avec une première valeur dans la table de bits pour configurer des ressources temps-domaine de groupe de ressources et la période de la première CG SL configurée par un dispositif de réseau.

**2.** Procédé selon la revendication 1, dans lequel le groupe de ressources associé à la première CG SL a la première valeur dans la table de bits.

**3.** Procédé selon la revendication 1 ou 2, dans lequel la première valeur est 1.

**4.** Procédé selon la revendication 1, dans lequel

il existe deux ressources de transmission SL dans une période de la première CG SL, et la ressource de transmission SL cible est une deuxième ressource de transmission SL parmi les deux ressources de transmission SL ; ou
il existe trois ressources de transmission SL dans une période de la première CG SL, et la ressource de transmission SL cible est une deuxième ressource de transmission SL ou une troisième ressource de transmission SL parmi les trois ressources de transmission SL.

**5.** Procédé selon l'une quelconque des revendications 1 à 4, dans lequel

la première CG SL est une CG SL de type 1, dans lequel la CG SL de type 1 est une CG SL configurée par le dispositif de réseau à travers une signalisation de contrôle de ressources radio, RRC ; ou
la première CG SL est une CG SL de type 2, dans lequel la CG SL de type 2 est une CG SL configurée par le dispositif de réseau à travers une signalisation RRC et activée à travers des informations de contrôle de liaison descendante, DCI.

**6.** Dispositif terminal (300), comprenant :
une unité de traitement (310) configurée pour déterminer une ressource temps-domaine pour une première attribution configurée, CG, de liaison latérale, SL, selon au moins un élément parmi : un nombre d'intervalles correspondant à une période de la première CG SL dans un groupe de ressources associé à la première CG SL et un décalage de domaine temporel d'une ressource de transmission SL cible dans la première CG SL par rapport à une première ressource de transmission SL, dans lequel le nombre d'intervalles correspondant à la période de la première CG SL dans le groupe de ressources associé à la première CG SL est déterminé en fonction d'au moins un élément parmi :
une longueur totale d'une table de bits pour configurer des ressources temps-domaine de groupe de ressources, un nombre de bits avec une première valeur dans la table de bits pour configurer des ressources temps-domaine de groupe de ressources et la période de la première CG SL configurée par un dispositif de réseau.

**7.** Dispositif terminal (300) selon la revendication 6, dans lequel le groupe de ressources associé à la première CG SL a la première valeur dans la table de bits.

**8.** Dispositif terminal (300) selon la revendication 6 ou 7, dans lequel la première valeur est 1.

**9.** Dispositif terminal (300) selon la revendication 6, dans lequel

il existe deux ressources de transmission SL dans une période de la première CG SL, et la ressource de transmission SL cible est une deuxième ressource de transmission SL parmi les deux ressources de transmission SL ; ou
il existe trois ressources de transmission SL dans une période de la première CG SL, et la ressource de transmission SL cible est une deuxième ressource de transmission SL ou une troisième ressource de transmission SL parmi les trois ressources de transmission SL.

**10.** Dispositif terminal (300) selon l'une quelconque des revendications 6 à 9, dans lequel

la première CG SL est une CG SL de type 1, dans lequel la CG SL de type 1 est une CG SL configurée par le dispositif de réseau à travers une signalisation de contrôle de ressources radio, RRC ; ou
la première CG SL est une CG SL de type 2, dans lequel la CG SL de type 2 est une CG SL configurée par le dispositif de réseau à travers une signalisation RRC et activée à travers des informations de contrôle de liaison descendante, DCI.

**11.** Dispositif de communication (400), comprenant :

une mémoire (420) configurée pour stocker des programmes informatiques ; et
un processeur (410) configuré pour invoquer et exécuter les programmes informatiques stockés dans la mémoire afin de mettre en œuvre le procédé selon l'une quelconque des revendications 1 à 5.

**12.** Support de stockage lisible par ordinateur stockant des programmes informatiques qui sont utilisables avec un ordinateur afin de mettre en œuvre le procédé selon l'une quelconque des revendications 1 à 10.

BASE STATION

◄—SL COMMUNICATION—►

FIG. 1

BASE STATION

◄—SL COMMUNICATION—►

FIG. 2

BASE STATION

←SL COMMUNICATION►

FIG. 3

UE1                    UE2

←DATA►

FIG. 4

COMMUNICATION GROUP

UE2

UE1

UE3

UE4

FIG. 5

UE2

UE6

UE1

UE3

UE5

UE4

FIG. 6

FIG. 7

200

START

DETERMINING, BY A TERMINAL DEVICE, A TIME-DOMAIN RESOURCE
FOR A FIRST SL CG ACCORDING TO FIRST INFORMATION, WHERE
THE FIRST INFORMATION INCLUDES BUT IS NOT LIMITED TO AT
LEAST ONE OF: A NUMBER OF SLOTS CORRESPONDING TO A PERIOD
OF THE FIRST SL CG IN A RESOURCE POOL ASSOCIATED WITH THE
FIRST SL CG, AN AVERAGE NUMBER OF LOGICAL SLOTS FOR SL
TRANSMISSION IN ONE RADIO FRAME, SFN INFORMATION WITHIN A
TIME RANGE OF A DOUBLE SFN, LOGICAL-SLOT INFORMATION
WITHIN THE TIME RANGE OF THE DOUBLE SFN, A TIME-DOMAIN
OFFSET WITHIN THE TIME RANGE OF THE DOUBLE SFN, AN OFFSET
IN TIME DOMAIN OF A TARGET SL TRANSMISSION RESOURCE IN THE
FIRST SL CG RELATIVE TO A FIRST SL TRANSMISSION RESOURCE

S210

END

FIG. 8

SFN#0    SFN#1    SFN#2    SFN#3

10/20MS    10/20MS    10/20MS    10/20MS

BITMAP(100100100100100100)    BITMAP(100100100100100100)    BITMAP(100100100100100100)

| SLOT UNAVAILABLE FOR UL TRANSMISSION | SLOT AVAILABLE FOR UL TRANSMISSION | SLOT IN RESOURCE POOL ASSOCIATED WITH CG | CG TIME-DOMAIN RESOURCE |

FIG. 9

FIG. 10

TERMINAL DEVICE 300

PROCESSING UNIT 310

FIG. 11

COMMUNICATION DEVICE 400

MEMORY
420

PROCESSOR
410

TRANSCEIVER
430

FIG. 12

APPARATUS 500

INPUT
INTERFACE
530

PROCESSOR
510

MEMORY
520

OUTPUT
INTERFACE
540

FIG. 13

COMMUNICATION
SYSTEM 600

TERMINAL
DEVICE

610

NETWORK
DEVICE

620

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200045674 A1

**Non-patent literature cited in the description**

- **OPPO**. Remaining issues of mode 1 resource allocation for NR-V2X. *3GPP DRAFT; R1-2001746, 3RD GENERATION PARTNERSHIP PROJECT (8GPP), MOBILE COMPETENCE CENTRE ; 650, ROUTE DES LUCIOLES; F-06921 SOPHIA-ANTIPOLIS CEDEX*

- **OPPO**. Discussion on resource allocation and HARQ process id of configured grant. *3GPP DRAFT; R2-2006769, 3RD GENERATION PARTNERSHIP PROJECT (8GPP), MOBILE COMPETENCE CENTRE ; 650, ROUTE DES LUCIOLES ; F-06921 SOPHIA-ANTIPOLIS CEDEX ; FRANCE*, vol. RAN WG2 (E)